# EUROPEAN PATENT SPECIFICATION

(11) **EP 3 306 767 B1**
(45) Date of publication and mention of the grant of the patent: **25.01.2023**
(21) Application number: 16193106.8
(22) Date of filing: 10.10.2016
(51) Int. Cl.: H02H 3/24, H02H 3/247

(54) **A CIRCUIT PROTECTION ARRANGEMENT**
SCHALTUNGSSCHUTZANORDNUNG
DISPOSITIF DE PROTECTION D'UN CIRCUIT

(43) Date of publication of application: 11.04.2018
(73) Proprietor: Veoneer Sweden AB, 447 83 Vårgårda (SE)
(72) Inventor: Jeannard, Jean-Francois, 78700 Conflans Sainte Honorine (FR); Fouilleul, Antoine, 95320 Saint-Leu La Foret (FR)
(74) Representative: Forresters IP LLP

(56) References cited:
- WO-A2-2011/083051
- CN-B- 102 270 831
- US-A1- 2005 275 988

## Description

### Description of Invention

The present invention relates to a circuit protection arrangement, and more particularly relates to a circuit protection arrangement for use in a vehicle to protect an electronic circuit.

Power supply disruptions are particularly common in a vehicle where the normal operation of the vehicle can disrupt power supplied by the vehicle's battery. An electronic circuit connected to the vehicle's battery can be subjected to a reversal in the polarity of the power supply voltage, negative voltage pulses, open circuits and/or short circuits. An electronic circuit can also be subjected to microcuts where the power supply to the electronic circuit is interrupted for a short period of time due to an open circuit or short circuit to ground.

Power supply disruptions, such as those described above, can cause an electronic circuit within a vehicle to malfunction and even cause permanent damage to the electronic circuit.

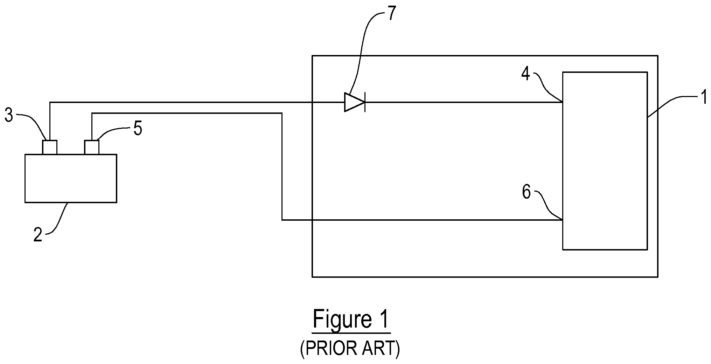

Referring now to figure 1 of the accompanying drawings, a conventional protection arrangement is provided to protect an electronic circuit 1 from disruptions in power supplied by a battery 2. The battery 2 comprises a positive voltage output terminal 3 which is coupled to a positive voltage input terminal 4 provided on the electronic circuit 1. A negative voltage output terminal 5 of the battery 2 is coupled to a negative voltage input terminal 6 on the electronic circuit 1.

A protection diode 7 is connected in series between the positive voltage output terminal 3 of the battery 2 and the positive voltage input terminal 4 of the electronic circuit 1.

The protection diode 7 protects the electronic circuit 1 from a reverse polarity condition where the polarity of the voltage from the battery 2 is reversed. The protection diode 7 also protects the electronic circuit 1 from negative pulses on the positive voltage connection from the battery 2. The protection diode 7 effectively blocks the negative voltage pulses and reverse polarity voltage to minimise disruption and damage to the electronic circuit 1.

The protection diode 7 also protects the electronic circuit 1 from microcuts, which occur when the power supply from the battery 2 is short circuited or disconnected for a short period of time.

The downside to using a protection diode to protect an electronic circuit is that the protection diode dissipates power unnecessarily. This is undesirable because there is almost always a need to reduce unnecessary power consumption within a vehicle. For instance, there is a need to reduce the power dissipation of a vehicle's electronic control unit (ECU) because power dissipation raises the temperature within the ECU which can decrease the lifetime and affect the reliability of the components of the ECU.

A further downside to using a protection diode arises because a protection diode has a forward voltage drop of approximately 0.7V which reduces the power supply voltage to the electronic circuit. The voltage drop is dependent upon the temperature and current consumption of the protection diode. Consequently, variations in the temperature and current consumption of the protection diode cause variations in the power supply voltage to the electronic component. These power supply voltage variations make it difficult for the electronic circuit to measure the true output voltage of the battery accurately. This is particularly undesirable in instances where an electronic circuit, such as an ECU, is designed to operate at a low battery voltage.

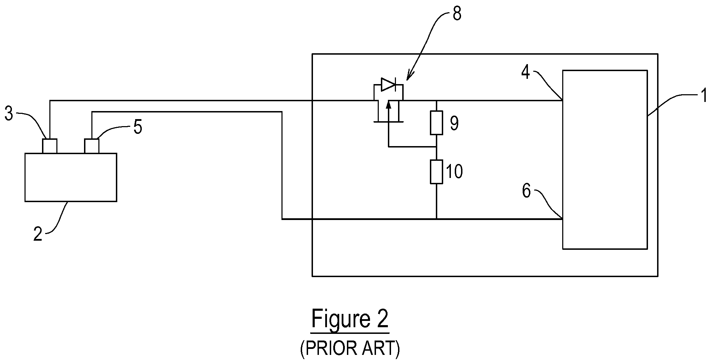

It is also known to use a transistor 8, such as a p-type metal-oxide-semiconductor field-effect transistor (MOSFET), in place of the protection diode 7, as shown in figure 2. A voltage bias is provided by a potential divider formed by series connected resistors 9, 10 at the gate terminal of the transistor 8 to keep the transistor 8 switched on.

A transistor has some benefits over a protection diode when it comes to protecting an electronic circuit. A transistor is efficient in providing protection from a reverse polarity in the power supply. Compared to a protection diode, a transistor has a low drop voltage of around 50mV to 100mV and minimal power dissipation when switched on.

However, there are downsides to using a transistor. A transistor does not provide efficient protection from microcuts where the input power supply is short circuited to ground for a short time. The transistor remains switched on for too long which can lead to the capacitors in the electronic circuit being discharged unnecessarily.

Furthermore, a transistor does not provide efficient protection from negative pulses. The transistor can stay switched on for too long in the event of a negative pulse which can cause damage to the electronic circuit. For instance, an electronic circuit can be damaged if it is operating at 12V and then switched suddenly to a negative voltage due to a negative pulse.

There is a need for an improved circuit protection arrangement for use in a vehicle.

Chinese patent no. 102270831 discloses a conventional power protection arrangement.

US-A-2005/0275988 discloses a conventional self-powering input buffer.

The present invention seeks to provide an improved circuit protection arrangement.

According to one aspect of the present invention, there is provided a circuit protection arrangement as defined in claim 1 hereinafter.

So that the present invention may be more readily understood, embodiments of the present invention will now be described, by way of example, with reference to the accompanying drawings, in which:
Figure 1 is a schematic diagram of a conventional circuit protection arrangement which uses a protection diode,
Figure 2 is a schematic diagram of a conventional circuit protection arrangement which uses a transistor,
Figure 3 is a schematic diagram of a circuit protection arrangement of an embodiment of the invention, and
Figure 4 is a circuit diagram of a circuit protection arrangement of an embodiment of the invention.

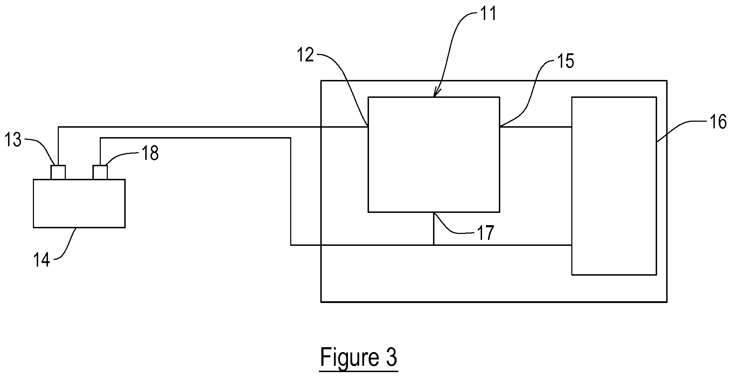

Referring to figure 3 of the accompanying drawings, a circuit protection arrangement 11 of an embodiment of the invention comprises an input terminal 12 which is configured to be connected to a power supply to receive a power supply voltage. In this embodiment, the input terminal 12 is coupled to a positive output voltage terminal 13 on a vehicle's battery 14. The circuit protection arrangement 11 comprises an output terminal 15 which is configured to be connected to an electronic circuit 16 to provide an output voltage to the electronic circuit 16. In this embodiment, the output terminal 15 is coupled to an electronic circuit 16 which forms part of a vehicle's electronic control unit (ECU).

The circuit protection arrangement 11 comprises a ground terminal 17 which, in this embodiment, is coupled to a ground terminal 18 provided on the battery 14. The electronic circuit 16 is also coupled to the ground terminal 18 of the battery 14.

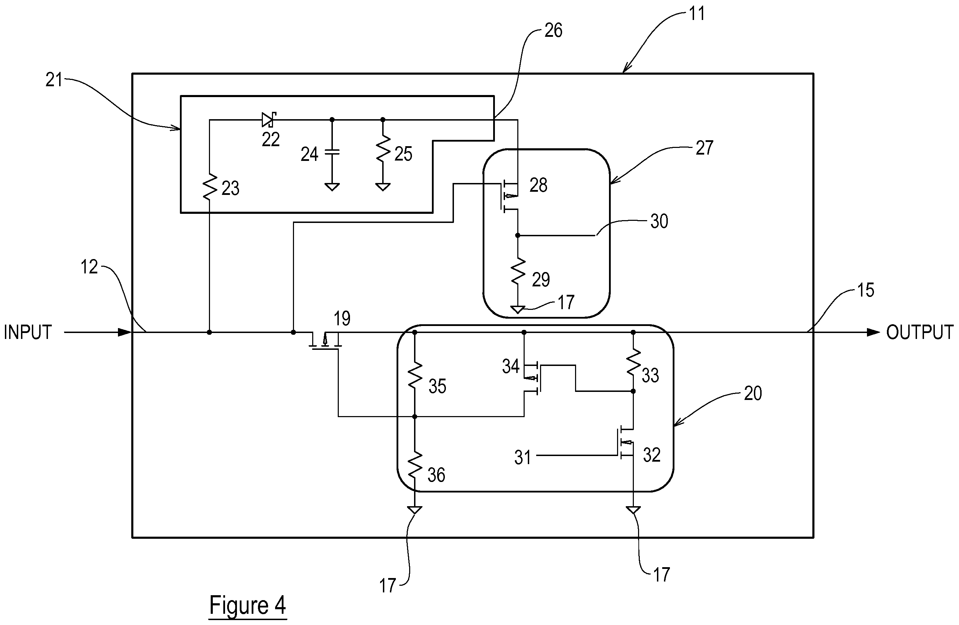

Referring now to figure 4 of the accompanying drawings, the circuit protection arrangement 11 comprises a controllable switch in the form of power transistor 19. In this embodiment, the power transistor 19 is a p-type MOSFET transistor. The drain terminal of the power transistor 19 is coupled to the input terminal 12 and the source terminal is coupled to the output terminal 15. The gate terminal of the power transistor 19 is coupled to a control module 20 which will be described in more detail below.

The circuit protection arrangement 11 comprises a voltage buffer module 21. The voltage buffer module 21 comprises a diode 22 having one terminal connected via a first resistor 23 to the input terminal 12. The other terminal of the diode 22 is coupled to a first terminal of a capacitor 24. The second terminal of the capacitor 24 is coupled to ground. A second resistor 25 has one terminal coupled to the first terminal of the capacitor 24 and another terminal coupled to ground. The voltage buffer module 21 further comprises a buffer output voltage terminal 26 which is coupled to the diode 22, the capacitor 24 and the second resistor 25.

The circuit protection arrangement 11 further comprises a detection module 27 which, in this embodiment, is in the form of a comparator circuit. The detection module 27 comprises a comparator transistor 28 having a gate terminal coupled to the input terminal 12. A drain terminal of the comparator transistor 28 is coupled to the buffer voltage output terminal 26 of the voltage buffer module 21. The source terminal of the comparator transistor 28 is coupled to ground via a third resistor 29. The detection module 27 further comprises a detection module output terminal 30 which is coupled to the drain terminal of the comparator transistor 28.

The control module 20 of the circuit protection arrangement 11 comprises a control input terminal 31 which is coupled to the detection module output terminal 30 to receive control signal output from the detection module 27.

The control module 20 comprises a first control transistor 32 having a gate terminal coupled to the control module input terminal 31. The source terminal of the first control transistor 32 is coupled to ground. The drain terminal of the first control transistor 32 is coupled to the output terminal 15 via a fourth resistor 33.

The control module 20 further comprises a second control transistor 34 having a gate terminal coupled to the drain terminal of the first control transistor 32. The source terminal of the second control transistor 34 is coupled to the output terminal 15 and the drain terminal of the second control transistor 34 is coupled to the gate terminal of the power transistor 19.

A bridge divider formed by series connected fifth and sixth resistors 35, 36 is connected across the source terminal of the power transistor 19 and ground. The output of the bridge divider, between the fifth and sixth resistors 35, 36 is coupled to the gate terminal of the power transistor 19.

The battery 14 provides a power supply voltage at the input terminal 12 of the circuit protection arrangement 11. The power supply voltage charges the capacitor 24 which stores electrical energy. The stored electrical energy enables the buffer voltage module 21 to provide a buffer output voltage at the buffer voltage output terminal 26 for a predetermined length of time. During normal vehicle operation, when the battery 14 is connected continuously to the input terminal 12, the buffer output voltage is substantially equal to the power supply voltage of the battery 14.

The detection module 27 is configured to sense the buffer output voltage and the power supply voltage and compare the two voltages to one another. If the power supply voltage is substantially equal to the buffer output voltage, the comparator transistor 28 switches off so that the detection module output terminal 30 is pulled to ground. A logic 0 is therefore present at the detection module output terminal 30. This logic 0 is a first control signal which is provided to the control module 20 via the connection to the control module input terminal 31.

The first control signal switches the first control transistor 32 off such that the gate terminal of the second control transistor 34 is pulled high to turn off the second control transistor 34. When the second control transistor 34 switches off, the voltage at the gate terminal of the power transistor 19 is raised to turn on the power transistor 19 so that current can flow from the input terminal 12, through the power transistor 19, to the output terminal 15 of the circuit protection arrangement 11. The voltage at the output terminal 15 is then substantially equal to the voltage at the input terminal 12, less the voltage drop across the power transistor 19. In embodiments of the invention, the voltage drop across the power transistor 19 is between 50mV and 100mV. This voltage drop across the power transistor 19 is determined in embodiments of the invention according to the transistor type and the drain-source current during operation.

If the power supply voltage drops below the normal power supply voltage, the detection module 27 detects the difference between the power voltage and the buffer output voltage which is, for a predetermined length of time, substantially equal to the original normal power supply voltage. The drop in the power supply voltage below the buffer output voltage causes the comparator transistor 28 to switch on so that the detection module output terminal 30 is pulled to substantially the same voltage as the buffer output voltage (less the voltage drop across the comparator transistor 28). The buffer output voltage provided at the detection module output terminal 30 constitutes a logic 1. This logic 1 is a second control signal which is provided to control module 20 via the connection to the control module input terminal 31.

In embodiments of the invention, the second control signal is a signal which may be substantially equal to the buffer output voltage or substantially equal to the output voltage of the circuit.

The second control signal switches the first control transistor 32 on such that the gate terminal of the second control transistor 34 is pulled to ground to turn on the second control transistor 34. When the second control transistor 34 switches on, the gate terminal of the power transistor 19 is pulled to the same voltage as the source terminal of the power transistor 19. The power transistor 19 therefore switches off so that current cannot flow from the input terminal 12, through the power transistor 19, to the output terminal 15 or in the reversed direction from the output terminal 15 to the input terminal 12.

The reduction in the power supply voltage may be caused by a disruption to the power supply from the battery 14. The disruption may be a short circuit, open circuit, a static reverse polarity, a negative voltage pulse, a microcut short circuit, a microcut to ground or any other disruption to the power supply which reduces quickly the voltage of the power supply. The detection module 27 detects the reduction in the power supply voltage below the normal power supply voltage by comparing the current power supply voltage with the "memorised" or stored normal power supply voltage which is output from the voltage buffer module 21 at the voltage buffer output terminal 26.

The detection module 27 detects the reduction in the power supply voltage quickly due to the fast response of the comparator transistor 28. The control module 20 responds to the control signal from the detection module 27 quickly, to switch off the power transistor 19 to effectively disconnect the output terminal 15 from the input terminal 12. A circuit connected to the output terminal 15 is thus effectively disconnected from the power supply within the vehicle to minimise or prevent disruption or damage to the electronic circuit by a disruption to the power supply.

Embodiments of the invention provide protection from reverse polarities in the power supply and open or short circuits to the power supply. The protection arrangement 11 also protects an electronic circuit from disruptions to the power supply which occur for a brief length of time, such as microcut short circuits to ground or microcut open circuits or negative voltage pulses.

While the embodiments of the invention described above comprise MOSFET transistors, other embodiments of the invention comprise other types of transistors, such as bipolar transistors.

When used in this specification and claims, the terms "comprises" and "comprising" and variations thereof mean that the specified features, steps or integers are included. The terms are not to be interpreted to exclude the presence of other features, steps or components.

## Claims

1. A circuit protection arrangement (11) for use in a vehicle, the arrangement (11) comprising:
an input terminal (12) configured to be connected to a power supply (14) to receive a power supply voltage;
an output terminal (15) configured to be connected to an electronic circuit (16) to provide an output voltage to the electronic circuit (16);
a power transistor (19) comprising a gate terminal, a drain terminal and a source terminal, wherein the drain terminal is coupled to the input terminal (12) and the source terminal is coupled to the output terminal (15) such that the power transistor (19) is connected in series between the input and output terminals (12, 15);
a control module (20) which is coupled to the gate terminal of the power transistor (19);
a voltage buffer module (21) coupled to the input terminal (12), the voltage buffer module (21) being configured to store electrical energy and to provide a buffer output voltage for a predetermined length of time, the buffer output voltage being substantially equal to the power supply voltage; and
a detection module (27) comprising a comparator circuit which incorporates a comparator transistor (28) having:
a gate terminal coupled to the input terminal (12),
a source terminal coupled to the voltage buffer module (21) to receive the buffer output voltage, and
a drain terminal coupled to the control module (20) to provide first and second control signals to the control module (20), wherein the detection module (27) is configured to detect if the power supply voltage is substantially equal to the buffer output voltage and to provide:
the first control signal to the control module (20) if the power supply voltage is substantially equal to the buffer output voltage, and
the second control signal to the control module (20) if the
power supply voltage is lower than the buffer output voltage,
wherein the control module (20) comprises:
a first control transistor (32) having a gate terminal which is coupled to the detection module (27) to receive the first and second control signals, a source terminal coupled to ground and a drain terminal coupled via a first resistor (33) to the source terminal of the power transistor (19),
a second control transistor (34) having a gate terminal coupled to the drain terminal of the first control transistor (32), a source terminal coupled to the source terminal of the power transistor (19) and a drain terminal coupled to the gate terminal of the power transistor (19), and
a second resistor (35) having a first terminal coupled to the drain terminal of the second control transistor (34) and a second terminal coupled to the source terminal of the second control transistor (34), and
a third resistor (36) having a first terminal coupled to the drain terminal of the second control transistor (34) and a second terminal coupled to ground, wherein the control module (20) is configured to control the power transistor (19) to:
switch on in response to the first control signal so that the protection arrangement (11) provides a voltage at the output terminal (15) which is substantially equal to the power supply voltage, and
switch off in response to the second control signal so that the protection arrangement (11) does not provide a voltage at the output terminal (15) to protect an electronic circuit (16) connected to the output terminal (15).

2. The arrangement of claim 1, wherein the voltage buffer module (21) comprises a capacitor (24) having a first terminal coupled to the input terminal (12) and a second terminal coupled to ground (17).

3. The arrangement of claim 2, wherein the voltage buffer module (21) comprises a diode (22) having one terminal coupled to the input terminal (12) and another terminal coupled to the first terminal of the capacitor (24).

4. The arrangement of any one of the preceding claims, wherein the first control signal is a signal at substantially 0V.

5. The arrangement of any one of the preceding claims, wherein the second control signal is a signal which is substantially equal to the buffer output voltage.

## Patentansprüche

1. Schaltungsschutzanordnung (11) zur Verwendung in einem Fahrzeug, wobei die Anordnung (11) umfasst:
Einen Eingangsanschluss (12), der ausgelegt ist, an eine Stromversorgung (14) angeschlossen zu werden, um eine Stromversorgungsspannung zu empfangen;
einen Ausgangsanschluss (15), der ausgelegt ist, an eine elektronische Schaltung (16) angeschlossen zu werden, um der elektronischen Schaltung (16) eine Ausgangsspannung bereitzustellen;
einen Leistungstransistor (19), der einen Gate-Schluss, einen Drain-Anschluss und einen Source-Anschluss umfasst, wobei der Drain-Anschluss an den Eingangsanschluss (12) gekoppelt ist und der Source-Anschluss an den Ausgangsanschluss (15) derart gekoppelt ist, dass der Leistungstransistor (19) zwischen den Eingangs- und Ausgangsanschlüssen (12, 15) in Reihe geschaltet ist;
ein Steuermodul (20), das an den Gate-Anschluss des Leistungstransistors (19) gekoppelt ist;
ein Spannungspuffermodul (21), das an den Eingangsanschluss (12) gekoppelt ist, wobei das Spannungspuffermodul (21) ausgelegt ist, elektrische Energie zu speichern und für eine vorbestimmte Zeitdauer eine Pufferausgangsspannung bereitzustellen, wobei die Pufferausgangsspannung wesentlich der Stromversorgungsspannung entspricht; und
ein Erkennungsmodul (27), das eine Vergleichsschaltung umfasst, die einen Vergleichstransistor (28) mit folgenden umfasst:
Einen Gate-Anschluss, der an den Eingangsanschluss (12) gekoppelt ist,
einen Source-Anschluss, der an das Spannungspuffermodul (21) gekoppelt ist, um die Pufferausgangsspannung zu empfangen, und
einen Drain-Anschluss, der an das Steuermodul (20) gekoppelt ist, um dem Steuermodul (20) erste und zweite Steuersignale bereitzustellen, wobei das Erkennungsmodul (27) ausgelegt ist, zu erkennen, ob die Stromversorgungsspannung wesentlich der Pufferausgangsspannung entspricht und bereitzustellen:
Das erste Steuersignal an das Steuermodul (20), falls die Stromversorgungsspannung wesentlich der Pufferausgangsspannung entspricht, und
das zweite Steuersignal an das Steuermodul (20), falls die Stromversorgungsspannung unter der Pufferausgangsspannung ist, wobei das Steuermodul (20) umfasst:
einen ersten Steuertransistor (32) mit einem Gate-Anschluss, der an das Erkennungsmodul (27) gekoppelt ist, um die ersten und zweiten Signale zu empfangen, einen Source-Anschluss, der an Masse gekoppelt ist und einen Drain-Anschluss, der über einen ersten Widerstand (33) an den Source-Anschluss des Leistungstransistors (19) gekoppelt ist,
einen zweiten Steuertransistor (34) mit einem Gate-Anschluss, der an den Drain-Anschluss des ersten Steuertransistors (32) gekoppelt ist, einem Source-Anschluss, der an den Source-Anschluss des Leistungstransistors (19) gekoppelt ist und einem Drain-Anschluss, der an den Gate-Anschluss des Leistungstransistors (19) gekoppelt ist, und
einen zweiten Widerstand (35) mit einem ersten Anschluss, der an den Drain-Anschluss des zweiten Steuertransistors (34) gekoppelt ist und einem zweiten Anschluss, der an den Source-Anschluss des zweiten Steuertransistors (34) gekoppelt ist, und
einen dritten Widerstand (36) mit einem ersten Anschluss, der an den Drain-Anschluss des zweiten Steuertransistors (34) gekoppelt ist und einem zweiten Anschluss, der an Masse gekoppelt ist, wobei das Steuermodul (20) ausgelegt ist, den Leistungstransistor (19) zu steuern, um sich:
Als Reaktion auf das erste Steuersignal einzuschalten, sodass die Schutzanordnung (11) eine Spannung am Ausgangsanschluss (15) bereitstellt, die wesentlich der Stromversorgungsspannung entspricht, und
als Reaktion auf das zweite Steuersignal auszuschalten, sodass die Schutzanordnung (11) keine Spannung am Ausgangsanschluss (15) bereitstellt, um eine mit dem Ausgangsanschluss (15) verbundene elektronische Schaltung (16) zu schützen.

2. Anordnung nach Anspruch 1, wobei das Spannungspuffermodul (21) einen Kondensator (24), dessen erster Anschluss an den Eingangsanschluss (12) gekoppelt ist und einen zweiten Anschluss umfasst, der an Masse (17) gekoppelt ist.

3. Anordnung nach Anspruch 2, wobei das Spannungspuffermodul (21) eine Diode (22) umfasst, wovon ein Anschluss an den Eingangsanschluss (12) gekoppelt ist und ein weiterer Anschluss an den ersten Anschluss des Kondensators (24) gekoppelt ist.

4. Anordnung nach irgendeinem der vorhergehenden Ansprüche, wobei das erste Steuersignal ein Signal bei wesentlich 0 V ist.

5. Anordnung nach irgendeinem der vorhergehenden Ansprüche, wobei das zweite Steuersignal wesentlich der Pufferausgangsspannung entspricht.

## Revendications

1. Un agencement de protection de circuit (11) pour utilisation dans un véhicule, l'agencement (11) comprenant :
une borne d'entrée (12) configurée pour être connectée à une alimentation électrique (14) pour recevoir une tension d'alimentation électrique ;
une borne de sortie (15) configurée pour être connectée à un circuit électronique (16) pour fournir une tension de sortie au circuit électronique (16) ;
un transistor de puissance (19) comprenant une borne de grille, une borne de drain et une borne de source, la borne de drain étant couplée à la borne d'entrée (12) et la borne de source étant couplée à la borne de sortie (15) de manière à ce que le transistor de puissance (19) soit connecté en série entre les bornes d'entrée et de sortie (12, 15) ;
un module de commande (20) qui est couplé à la borne de grille du transistor de puissance (19) ;
un module de tampon de tension (21) couplé à la borne d'entrée (12), le module de tampon de tension (21) étant configuré pour stocker de l'énergie électrique et fournir une tension de sortie de tampon pendant une durée prédéterminée, la tension de sortie de tampon étant sensiblement égale à la tension d'alimentation électrique ; et
un module de détection (27) comprenant un circuit comparateur qui comprend un transistor comparateur (28) ayant :
une borne de grille couplée à la borne d'entrée (12),
une borne de source couplée au module de tampon de tension (21) pour recevoir la tension de sortie de tampon, et
une borne de drain couplé au module de commande (20) pour fournir des premier et deuxième signaux de commande au module de commande (20), le module de détection (27) étant configuré pour détecter si la tension d'alimentation électrique est sensiblement égale à la tension de sortie de tampon et pour fournir :
le premier signal de commande au module de commande (20) si la tension d'alimentation électrique est sensiblement égale à la tension de sortie de tampon, et
le deuxième signal de commande au module de commande (20) si la tension d'alimentation électrique est inférieure à la tension de sortie de tampon,
le module de commande (20) comprenant :
un premier transistor de commande (32) ayant une borne de grille qui est couplée au module de détection (27) pour recevoir les premier et deuxième signaux de commande, une borne de source couplée à la terre et une borne de drain couplée via une première résistance (33) à la borne de source du transistor de puissance (19),
un deuxième transistor de commande (34) ayant une borne de grille couplée à la borne de drain du premier transistor de commande (32), une borne de source couplée à la borne de source du transistor de puissance (19) et une borne de drain couplée à la borne de grille du transistor de puissance (19), et
une deuxième résistance (35) ayant une première borne couplée à la borne de drain du deuxième transistor de commande (34) et une deuxième borne couplée à la borne de source du deuxième transistor de commande (34), et
une troisième résistance (36) ayant une première borne couplée à la borne de drain du deuxième transistor de commande (34) et une deuxième borne couplée à la terre, le module de commande (20) étant configuré pour commander le transistor de puissance (19) de :
s'allumer en réponse au premier signal de commande de manière à ce que l'agencement de protection (11) fournisse une tension au niveau de la borne de sortie (15) qui soit sensiblement égale à la tension d'alimentation électrique, et
s'éteindre en réponse au deuxième signal de commande de manière à ce que l'agencement de protection (11) ne fournisse pas de tension au niveau de la borne de sortie (15) pour protéger un circuit électronique (16) connecté à la borne de sortie (15).

2. L'agencement de la revendication 1, dans lequel le module de tampon de tension (21) comprend un condensateur (24) ayant une première borne couplée à la borne d'entrée (12) et une deuxième borne couplée à la terre (17).

3. L'agencement de la revendication 2, dans lequel le module de tampon de tension (21) comprend une diode (22) ayant une borne couplée à la borne d'entrée (12) et une autre borne couplée à la première borne du condensateur (24).

4. L'agencement d'une quelconque des revendications précédentes, dans lequel le premier signal de commande est un signal à sensiblement 0 V.

5. L'agencement d'une quelconque des revendications précédentes, dans lequel le deuxième signal de commande est un signal qui est sensiblement égal à la tension de sortie de tampon.
